# EUROPEAN PATENT APPLICATION

(11) **EP 0 562 325 A2**
(43) Date of publication of application: **29.09.1993**
(21) Application number: 93103468.0
(22) Date of filing: 04.03.1993
(51) Int. Cl.: B60R 25/04

(54) **Vehicle anti-theft status memory**

(30) Priority: 25.03.1992 IT RE920021
(71) Applicant: ZENDAR S.p.A., I-42020 Montecavolo di Quattro Castella, Reggio Emilia (IT)
(72) Inventor: Ferretti, Nerino, via P. Togliatti 46/A, (Regio Emilia) (IT)
(74) Representative: Lecce, Giovanni

(57) **Abstract**

In the duct (5) carrying the fuel flow there is arranged a shaped piston (4) comprising an upper bellows (11) which engages with a central coaxial control stem (10).

The piston is driven by an operator (2) whose intervention is conditioned by activation or not of an anti-theft device. With the operator (2) in neutral position or with the anti-theft turned on, the piston (4) closes the fuel passage port. With the operator in working position, i.e. with the anti-theft device excluded, it is extended, the piston rises and the passage port (7) opens. Under these conditions the pressure differential between upstream and downstream, apart from the direction of flow, arranges itself both in the direction of flow and upstream and downstream of the central zones delimited and separated by said upper bellows (11). The pressure differential arranges the central control stem (10) in a position of adherence with a ring of balls (9) which, thrust radially outward, are engaged in a peripheral seat (13). Said engagement prevents the piston (4) from returning to its neutral position even if the operator (2) should return inward because of, for example, breakage. The fuel flow continues thus for the entire period that the vehicle keeps the motor running, i.e. as long as the status of pressure head between upstream and downstream of the stem (10) prevails. Upon stopping of the motor, i.e. upon elimination of the pressure differential, the piston (4) is thrust into the closed position by a counteracting spring (6) which relaxes from its compressed condition.

## Description

The present invention relates to a status memory for vehicle anti-theft devices and the like substantially consisting of means of preventing total closing of the fuel flow if the operator of any adequate type of anti-theft should for any reason fail and close during movement of the vehicle.

Flow cut-off prevention allows users to continue travel started as long as the motor remains turned on and a pressure differential is maintained between upstream and downstream of the fuel flow. Upon turning off the motor the pressure differential is eliminated and the fuel duct is cut off, preventing subsequent fuel efflux. The device consists substantially of a piston with a coaxial central operating stem connected together by means of an elastic membrane with positioning balls inserted in a fuel efflux duct in alignment with an anti-theft control operator.

It is known that many of the present vehicle anti-theft devices are based substantially on cutting off by a gate valve of fuel flow, preferably applied between the filter and the injectors or the injection pump or the like.

At present said cut-off means are solenoid valves or electrical operators consisting of motors with liquid, solid or gas expansion or other control systems operated by electric and/or electronic circuits and so on.

Said devices, although effective as protective assurance of vehicles during parking, have however a specific and not negligible shortcoming as regards safety of the vehicles during use.

Said shortcoming derives from the functional concept of anti-theft devices and the eventuality that they could fail during normal operating conditions of the vehicle when running.

In the above possible situation with failure of the anti-theft system, closing of the gate valve and hence cut-off of fuel flow cause sudden turning off of the motors with resulting sudden slowing of travel and immediate ineffectiveness of the power devices such as for example power steering and power brakes.

Such conditions could be very dangerous in case of high speed driving, heavy traffic, passing and so forth.

The purpose of the present invention is to eliminate the aforesaid shortcoming.

The present invention as characterised in the claims solves the problem by means of a vehicle anti-theft status memory by means of which are obtained the following results: the gate valve cutting off the fuel flow and controlled by the operator of an anti-theft device consists of a shaped piston and a coaxial central control stem engaged between them by means of an elastic membrane which when operating allows maintaining constant and unchanged the pressure differential between upstream and downstream of the fuel flow and prearranging a resulting positioning of the central stem in relation to the piston in such a manner that the latter, by means of positioning balls, can maintain its position of noncut-off of fuel flow, apart from the active or passive position of the control operator.

Another result lies in the fact that the above positioning condition, which is a function of the pressure differential, is independent of the direction of fuel flow. Another result lies in the fact that the fuel flow passage port between the conditions of functioning operator and non functioning operator occurring with normal running or with motor going, remains open unless there is a contained throttling as long as said functioning phase persists. Said port closes upon extinguishment of the motor, i.e. upon elimination of said pressure differential, and after said closing there cannot ensue reopening except after elimination of the cause of failure which caused closing of the operator.

The advantages achieved by the present invention consist essentially of the fact that with the anti-theft deactivated and under conditions of motor and/or vehicle running the fuel flow supplies the motor regularly since the passage port cannot be closed, even if the opening system and/or the electronic circuit of the anti-theft device should fail. This means that, especially when running, the vehicles can always be controlled with all their devices functioning and operating regularly, and said condition can be maintained until extinguishment of the motor, i.e. as long as fuel flow is regular and is not cut off by rotation of the key in the panel.

To clarify the explanation of the innovative principles of the present invention and its advantages compared with the known art there is described below with the aid of the annexed drawings a possible embodiment by way of nonlimiting example applying said principles. In the drawings -
FIG. 1 shows a longitudinal cross section of an anti-theft assembly with partially normal and partially anomalous functional diagram of the status memory device under moving conditions,
FIG. 2 shows a cross section and a side view of a general lock applicable to the device,
FIG. 3 shows a partial cutaway view of the status memory device in closed condition with the operator in neutral position,
FIG. 4 shows a partial cutaway view of the status memory device in open condition with the operator in working position,
FIG. 5 shows a partial cutaway view of the status memory device in open condition with the operator failed in closed position and with pressure differential and fuel flow in one direction, and
FIG. 6 shows the same partial cutaway view of the status device indicated in FIG. 5 with the failed operator in closed condition and with pressure differential and fuel flow in the opposite direction.

The FIGS. illustrate a vehicle anti-theft status memory device substantially consisting of an anti-theft unit (1) such as for example the electric or electronic type with liquid expansion motors or the like in which an operator (2) comprises a control pin (3) which under the various conditions operates or does not operate a piston (4) inserted coaxially in a fuel efflux duct (5).

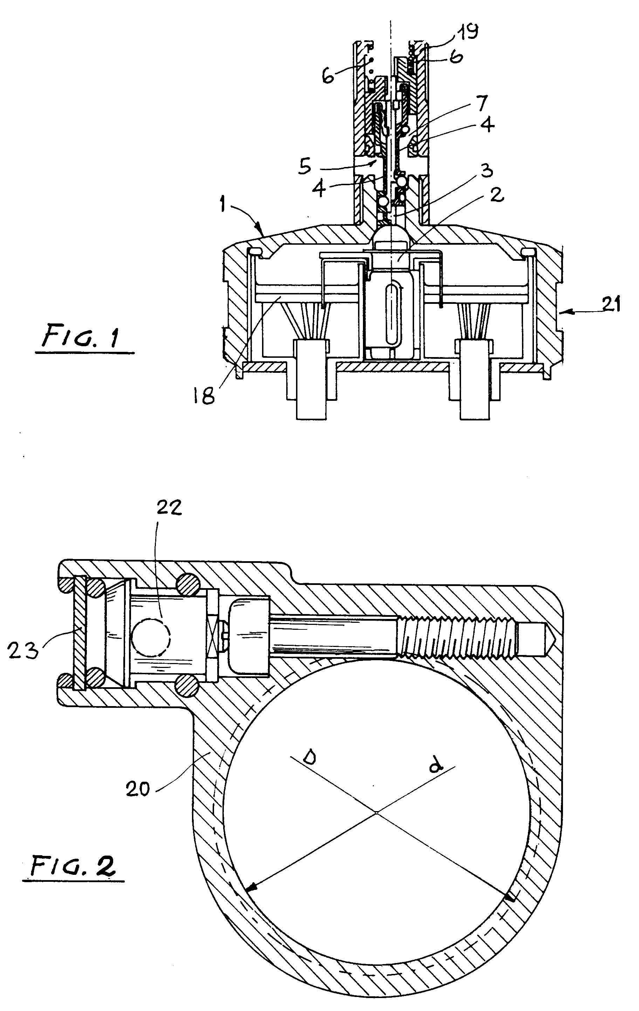

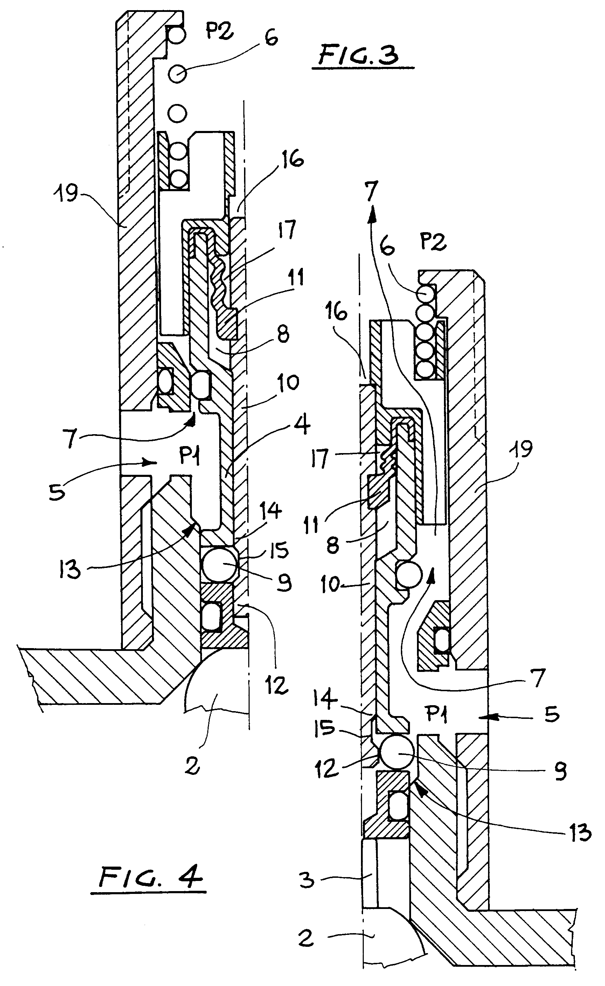

In accordance with FIGS. 1 and 3, when the anti-theft device (1) is activated the control pin (3) of the operator (2) is closed, the piston (4) is thrust against the operator by means of a counteracting spring (6) and the passage port (7) of the fuel feed duct (5) is occluded by the piston (4).

As a result, any attempt to start the motor, activating the electrical ignition system, leads to no positive result because fuel flow has been cut off.

When the user intends to start his vehicle, first he deactivates the anti-theft (1) so that the control pin (3) of the operator (2) lifts the piston (4) and positions it so as to open the passage port (7) while the counteracting spring (6) is compressed, after which he can activate the ignition system by turning the key in the panel.

In operation, because of the presence of obstructions and/or changes in the cross section of the fuel passage port (7) there is originated a local pressure loss, i.e. a pressure drop, between upstream and downstream of the device, e.g. between the fuel pump and the injectors or the like. In particular, the pressure P1 will always be greater or less than P2 depending on fuel flow direction and this condition occurs even if the anti-theft device (1) should fail during operation of the motor and during running of the vehicle.

In such a case the control pin (3) of the operator (2) detaches from the piston (4) which, under the effect of the counteracting spring (6), tends to return to the closed position, but this is prevented by the aforesaid pressure differential and the fact that the central piston (10) forces the balls (9) into the tapered seats (13).

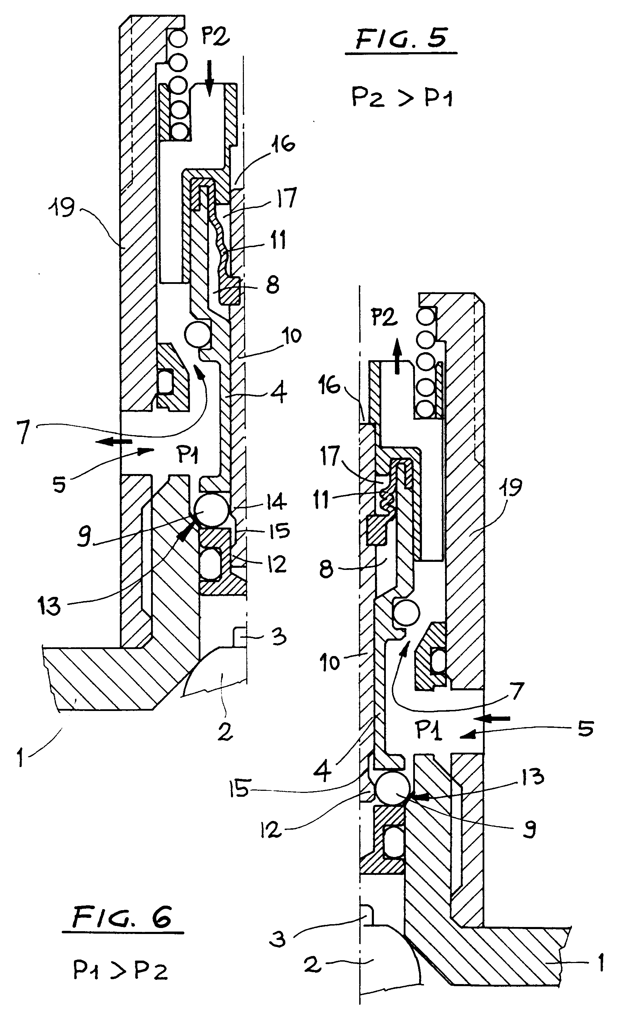

Assuming the case where P1>P2 (FIG. 6), during operation the pressure P1 propagates through the seats of peripheral balls (9), goes between the outer surface of a central stem (10) and the surface of its seat provided in the centre of the piston (4), and acts in a space (8) delimited by the inner surface of an elastic bellows (11) which connects together said stem and said piston. The lower pressure P2 acts on the outer end (16) of said stem (10) in the space (17) delimited by the outer surface of the elastic bellows (11). The pressure differential derived causes compression of the bellows from inside outward and dragging in said direction of the central stem (10) constrained thereto.

In the movement, the stem brings into a relation of outward radial thrust its rear ring (12) with the peripheral balls (9) which engage against a peripheral shoulder (13), counteracting the counteracting spring (6) and locking in open position the piston (4), unless there is an optional and modest return travel allowing the balls (9) to engage against the shoulder (13).

The passage port (7) thus remains open and the fuel flow continues regularly and remains so as long as the pressure differential condition between the specified zones is maintained.

In a manner analogous to that described, the pressure differential between the indicated zones produces the same effect even where pressure is P1<P2 (FIG. 5). The pressure differential causes in this case relaxation of the elastic bellows (11) and sliding of the stem (10) in the direction opposite that indicated above. Instead of its rear ring (12) engaging with outward radial thrust the peripheral balls (9), it is an intermediate ring (14) of it, opposite that mentioned above and counter to it in relation to an intermediate channelling (15), in relation to which the balls (9) align in closed condition of the device.

Even in the condition of engagement with the intermediate ring (14) the balls (9) engage against the peripheral shoulder (13) and counteract the closing action of the counteraction spring (6) and lock the piston (4) in the open position.

Also in this case the opening port (7) remains open and fuel flow continues regularly, assuring operation of the motor and this condition is maintained as long as the pressure differential between the specified zones prevails.

In case of stopping of the motor and hence zeroing of the pressure differential, i.e. P1 = P2, there being no load contrast on either side, the bellows (11) assumes its natural configuration, the stem (10) arranges itself accordingly and the balls return inward, engaging themselves in the intermediate channel (15) no longer acting on the peripheral shoulder (13). The spring (6), no longer countered, relaxes and pushes back the piston (4), which returns to the closed position, obstructing the passage port (7).

At this point starting of the motor is no longer possible except after resetting the anti-theft operating device, assumed to be failed.

In the above conditions, i.e. with failure of the anti-theft device, a warning light or an audible signal advises the user of said status but the vehicle can continue running.

From the above description and illustration it is clear that the system altogether consists of two distinct parts: the electronic control (18) with the operator (2) and the status memory configuration comprising the piston (4), the stem (10), the elastic bellows (11) and the other parts, the threaded bush (19) which permits customising the anti-theft device (1) for the different fastenings of the vehicle.

The anti-theft assembly is then protected from any tampering and/or removals by means of an anti rotation or anti screwing protection (20) to be locked on the anti-theft device (1)opposite the peripheral groove (21) with internal diameter (D) corresponding to that of the groove (21) and the diameter (d) corresponding to the outside diameter of the anti-theft device (1).

Said bushing is equipped with a lock (22) with sealed cover (23). The protection (20) is fastened on the system and rotates freely on the same axis.

## Claims

1. Vehicle anti-theft status memory combined with an anti-theft device (1) with solenoid valve and electric operators consisting of motors with liquid, solid or gas expansion, with actuator or other control systems operated by electric or electronic circuits and characterized in that it comprises a moving shaped piston (4) and a coaxial central stem (10) connected together by means of an elastic bellows (11) and aligned in a fuel feed duct (5) in continuance and alignment with an operating pin (3) of an operator (2), said piston (4) being combined with a plurality of peripheral balls (9) with radial running engageable or not engageable with a peripheral shoulder (13) and being equipped with a counteracting spring (6) opposed to said balls (9).

2. Status memory in accordance with claim 1 characterized in that under conditions of activated anti-theft device (1), retracted operating pin (3) and extinguished motor, the piston (4) is thrust into retracted position by the relaxing action of the counteraction spring (6), the passage port (7) for fuel flow is totally obstructed, the balls (9) are included in corresponding seats present on the piston (4) and in alignment with a channel (15) present on the central stem (10) and between upstream and downstream of the elastic bellows (11) there remains no pressure differential.

3. Status memory in accordance with claim 1 characterized in that under conditions of deactivated anti-theft device (1), extended operating pin (3) and running motor, the piston (4) is thrust into advanced position by said pin (3) with the counteraction spring (6) contracted, the passage port (7) for fuel flow is totally open and between upstream and downstream of the elastic bellows (11), between the lower space (8) and the upper space (17) there is a pressure differential corresponding to that present between upstream and downstream of the system, apart from the direction of fuel flow.

4. Status memory in accordance with claims 1 and 3 characterized in that under conditions of deactivated anti-theft device (1) but with retracted operating pin (3) and running motor, the piston (4) remains in the advanced position with counteracting spring (6) contracted and with the passage port (7) for fuel flow totally open, said condition being a function of the pressure differential between upstream and downstream of the elastic bellows (11), of the relative movement undergone by the stem (10) in relation to the deformation of the bellows and engagement of the rear rings (12) and intermediate rings (14) of said stem (10) which enter into an engagement relationship, in accordance with radial thrusts outward, with peripheral balls (9) which seat in support with a peripheral shoulder (13).

5. Status memory in accordance with claims 1, 3 and 4 characterized in that for the pressure differential between upstream and downstream of the spaces (8) and (17) delimited by the elastic bellows (11) there is a corresponding permanent opening of the passage port (7) for fuel flow.

6. Status memory in accordance with claims 1 to 5 characterized in that it is arranged in combination with an electronic control (18) with operator (2) and interchangeable customised bushing (19).

7. Status memory in accordance with claims 1 to 6 characterized in that the combined anti-theft device (1) is equipped with an anti rotation or anti unscrewing protection to be locked on the bushing (19).

8. Status memory in accordance with claim 1 characterized in that it can be connected to a warning light or an audible warning device in case of failure.

9. Vehicle anti-theft status memory in accordance with the above claims as described and illustrated and for the specified purposes.
